# EUROPEAN PATENT SPECIFICATION

(11) **EP 2 098 406 B1**
(45) Date of publication and mention of the grant of the patent: **12.06.2013**
(21) Application number: 09153785.2
(22) Date of filing: 26.02.2009
(51) Int. Cl.: B60N 2/36

(54) **Vehicle seat**
Fahrzeugsitz
Siège de véhicule

(30) Priority: 28.02.2008 JP 2008048552
(43) Date of publication of application: 09.09.2009
(73) Proprietor: Toyota Boshoku Corporation, Kariya-shi, Aichi 448-8651 (JP)
(72) Inventor: Nagase, Takuya, Ikeda-shi, Osaka 563-8651 (JP); Kakumu, Michinori, Toyota-shi, Aichi-ken, 471-8571 (JP); Okugawa, Akiyoshi, Kariya-shi, Aichi-ken, 448-8651 (JP); Asahina, Kazuya, Osaka 546-0041 (JP)
(74) Representative: Winter, Brandl, Fürniss, Hübner, Röss, Kaiser, Polte - Partnerschaft

(56) References cited:
- EP-A- 0 965 488
- DE-A1- 2 941 235
- FR-A- 2 532 595
- FR-A- 2 856 718
- US-B1- 6 733 078

## Description

### Technical Field of the Invention

The present invention relates to a vehicle seat whose seat back is configured to be switchable between an upright position and a forwardly-tipped position.

### Background of the Invention

In so-called two-box vehicles, and the like, a seat back of a rear seat is configured to be switchable between an upright position and a forwardly-tipped position. Some of the vehicles are configured such that a trunk room floor located behind the rear seat can be extended by switching the seat back to the forwardly-tipped position.

The seat back of the rear seat is supported to be rotatable in a front-rear direction of the vehicle about a pivot located at a lower end of the seat back, and is provided with a lock mechanism that can hold the seat back in the upright position by regulating forward rotating action of the seat back.

For example, a related-art lock mechanism regulates forward rotating action of a seat back by engagement between pins provided on a seat back and hook portions of lock levers provided on a vehicle body, as shown in Fig. 2 of JP-UM-A-S56-161067.

However, in order to forwardly tip the seat back of a vehicle seat having a lock mechanism described in JP-UM-A-S56-161067, it is necessary to perform two separate operations; that is, unlocking operation for rotating a lock lever of the lock mechanism, to thus disengage the hook portions from the pins, and forwardly tipping operation for forwardly tipping the seat back.

In DE 2941235 A1 a vehicle seat is disclosed showing the features of the preamble of claim 1.

### Summary of the Invention

The present invention has been made in view of the above circumstance and aims to improve operability when a seat back is forwardly tipped.

Accordingly, an aspect of the present invention provides a vehicle seat comprising the features of claim 1.

According to the above configuration, by rotating the handgrip forwardly, the hook portion of the lock member is rotated forward in the vehicle, so that the hook portion is disengaged from the lock striker provided on the vehicle body. As the lock member is further rotated forwardly, the seat back can be rotated forwardly about a pivot provided at a lower end of the seat back.

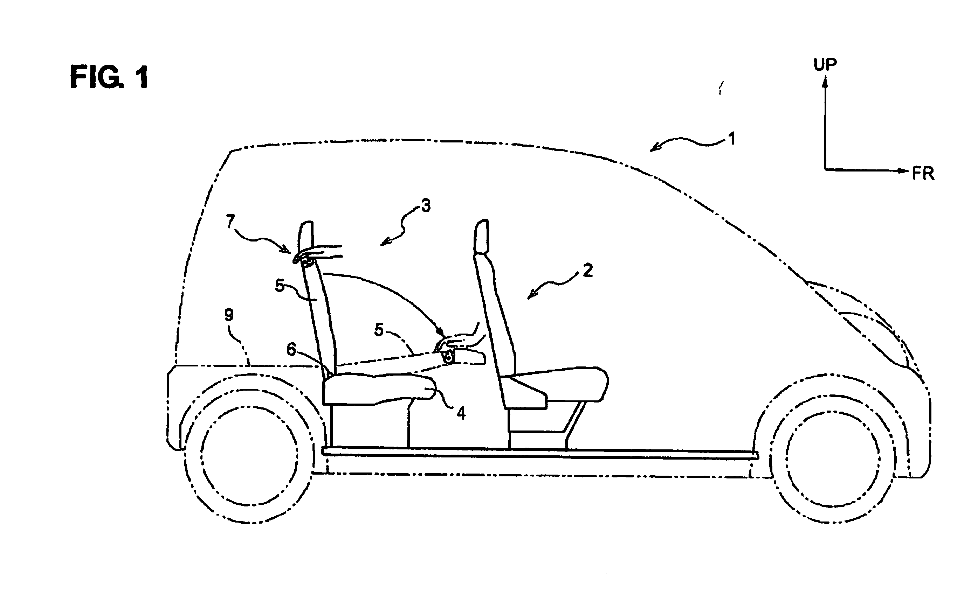

Specifically, as shown in Figs. 1, 4A, 4B, 5A, and 5B, the rotating direction of the handgrip when the hook portion is disengaged from the lock striker matches the direction in which the seat back is forwardly tipped. Hence, when the seat back in the upright position is forwardly tipped, operation for unlocking the lock member and forwardly tipping operation for forwardly tipping the seat back can be performed as one series of continuous operations. As a consequence, operability when the seat back is forwardly tipped can be improved.

### Brief Description of the Drawings

In the accompanying drawings:

Fig. 1 is a side view of a rear seat according to an embodiment of the present invention;

Fig. 2 is a perspective view of a lock mechanism that is applied to the vehicle seat according to the embodiment of the present invention;

Fig. 3 is a transverse cross section of the lock mechanism that is applied to the vehicle seat according to the embodiment of the present invention;

Figs. 4A and 4B are side views showing that a lock mechanism is released from a locked state in the embodiment of the present invention;

Figs. 5A and 5B are perspective views showing that the lock mechanism is released from the locked state in the embodiment of the present invention; and

Figs. 6A and 6B are side views showing that the lock mechanism is brought into a locked state in the embodiment of the present invention.

### Detailed Description of the Embodiment

Embodiments of the present invention will be described hereunder by reference to the drawings.

An embodiment of a vehicle seat of the present invention will be described by reference to Figs. 1 through 6.

In the respective drawings, an arrow FR, an arrow UP, and an arrow W respectively designate a forward direction (a traveling direction), an upward direction, and a width direction (a right-left direction) of a vehicle 1. Theses directions match a forward direction, an upward direction, and a width direction of a vehicle seat, respectively.

(Configuration of a vehicle seat)

Fig. 1 shows, as a side view, a front seat 2 that is arranged in the interior of a vehicle 1 and that can be used as a driver's seat or a passenger seat, and a rear seat 3 according to an embodiment of the present invention. An arrow shown in Fig. 1 depicts a rotating direction (forward rotating) of a seat back 5 of the rear seat 3.

As shown in Fig. 1, the rear seat 3 includes a seat cushion 4 serving as a seat part and the seat back 5 serving as a backrest. The seat back 5 is supported rotatably in a front-rear direction about a pivot 6 (a pivot) provided at lower end of the seat back, and is configured to be switchable between an upright position and a forwardly-tipped position.

Specifically, as indicated by a solid line in Fig. 1, in the upright position of the seat back 5, forwardly rotating action of the seat back 5 is regulated by a lock mechanism 7 provided at an upper edge of the seat back 5, so that passengers can sit on the rear seat 3.

As indicated by a broken line in Fig. 1, the lock mechanism 7 is released (disengaged) from a locked state, whereby the seat back 5 can be forwardly rotated and folded over the seat cushion 4 into the forwardly-tipped position. Accordingly, a trunk room floor 9 located behind the rear seat 3 can be extended.

(Configuration of the lock mechanism 7)

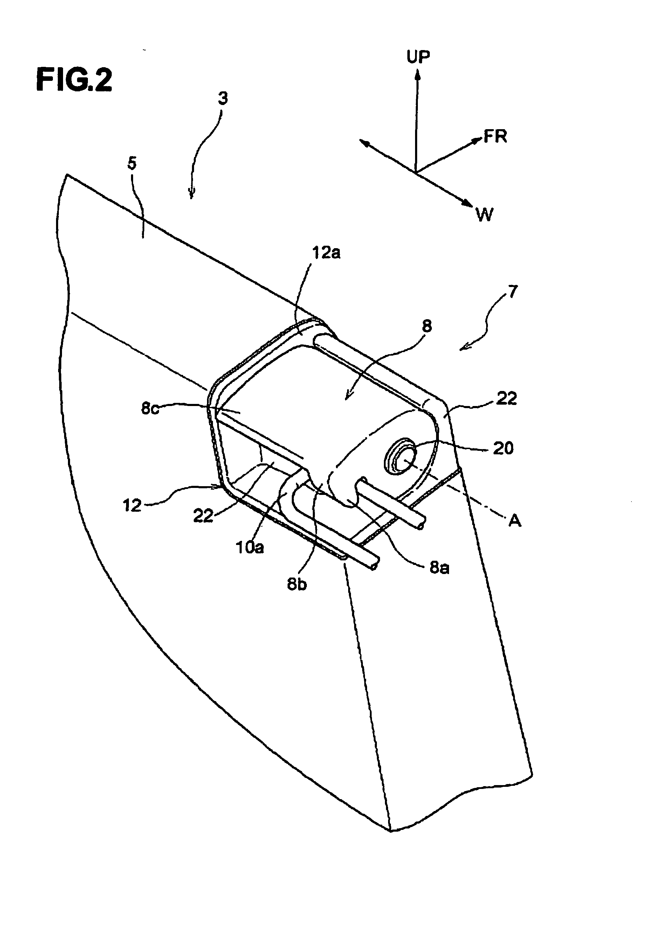

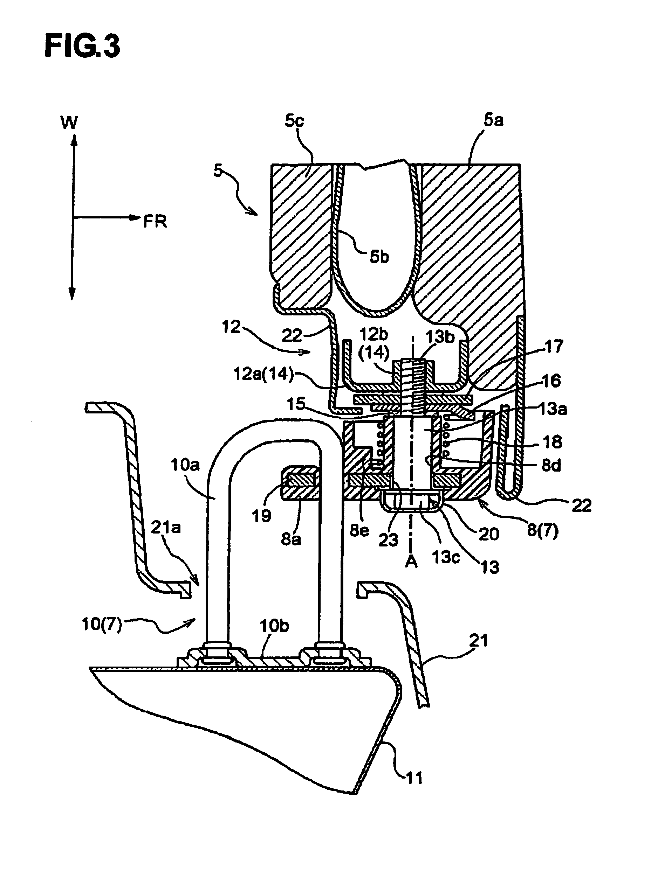

Fig. 2 shows the lock mechanism 7 applicable to the vehicle seat according to the embodiment of the present invention as a perspective view, and Fig. 3 shows the same as a transverse cross section. Figs. 2 and 3 show that (a locked state in which) a hook portion 8a of a lock member 8 engages with an engaging portion 10a of a lock striker 10.

As shown in Fig. 3, the lock mechanism 7 includes the lock member 8 provided on the seat back 5 of the rear seat and a lock striker 10 provided on a vehicle body 11.

(1) Lock member 8

As shown in Fig. 2, the lock member 8 is provided in a cutout 12 formed by cutting a portion of an upper edge of a seat back 5 at a left end in a width direction of the vehicle. The lock member 8 includes the hook portion 8a that is engageable with the engaging portion 10a of the lock striker; and a handgrip 8c that can be gripped by an operator (e.g., a passenger, or the like). The hook portion 8a of the lock member 8 of the present embodiment is continually connected to the handgrip 8c. The handgrip 8c is provided within the seat back 5 in the width direction of the vehicle.

Further, as shown in Fig. 3, the lock member 8 is supported by a mount bolt 13, which projects in a sideway direction (the width direction) with respect to a sidewall 12a of the cutout 12 to be rotatable about a shaft core A (a side axis). Herein, the direction from the axis to the handgrip 8c is same as a direction from the axis to the hook portion 8a.

The lock member 8 has, in detail, a bolt insert hole 8d that allows insertion of the mount bolt 13, and a shaft 13a of the mount bolt 13 is fittingly inserted in the bolt insert hole 8d.

An upper edge of a frame material 14, which is a framework of the seat back 5, serves as a part of the sidewall 12a of the cutout 12, and a female screw 12b that allows screw-engagement of an external thread 13b of the mount bolt 13 is provided in the sidewall 12a (the upper edge of the frame material 14).

The external thread 13b is inserted into a through hole of a spring latch member 16 via a first washer plate 15 with the lock member 8 set on the shaft 13a to thus penetrate through hole. The lock member 8 is rotatable about the shaft 13a in this state. Further, the external thread 13b is screw-engaged with the female thread 12b of the sidewall 12a additionally via a second washer plate 17, whereupon the mount bolt 13 jointly fastens the spring latch member 16 to the frame material 14.

A coil spring 18 is wrapped around an outer periphery of the bolt insert hole 8d of the lock member 8. One end of the coil spring 18 is latched on the spring latch member 16, and the other end of the same is latched on a counterpart latch portion 8e of the lock member 8. The lock member 8 is urged by the coil spring 18 so as to rotate rearwardly. That is, the coil spring 18 urges the lock member 8 to engage with the lock striker 10.

A steel plate member 19 for reinforcing purpose is incorporated in the lock member 8 with a bush 23 interposed between the steel plate member and the mount bolt 13, and the lock member 8 is provided with a bolt cap 20 for covering a head 13c of the mount bolt 13.

(2) Lock striker 10

As shown in Fig. 3, the lock striker 10 includes a latch portion 10a that is engageable with the hook portion 8a of the lock member 8, and a mount portion 10b. The mount portion 10b is secured to the vehicle body 11 (an upper body). When viewed from the above, the lock striker 10 is provided so as to overlap the seat back 5.

The latch portion 10a is made of a round metal bar. An axial line of the latch portion is bent into the shape of the letter U such that the latch portion stands so as to extend from the mount portion 10b toward the interior of the vehicle thorough an opening 21a formed in a deck-side trim 21, and both ends of the latch portion are fixed to the mount portion 10b.

(Operation for unlocking the lock mechanism 7 and operation for forwardly tipping the seat back 5)

In the vehicle seat of the present embodiment, there will be described hereunder a method for releasing the seat back 5 in the upright position, thereby bringing the seat back 5 into the forwardly-tipped position.

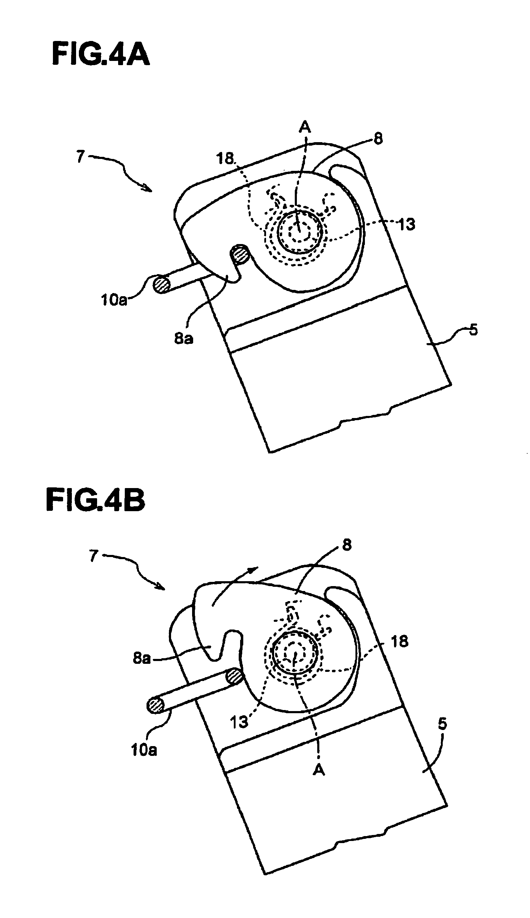

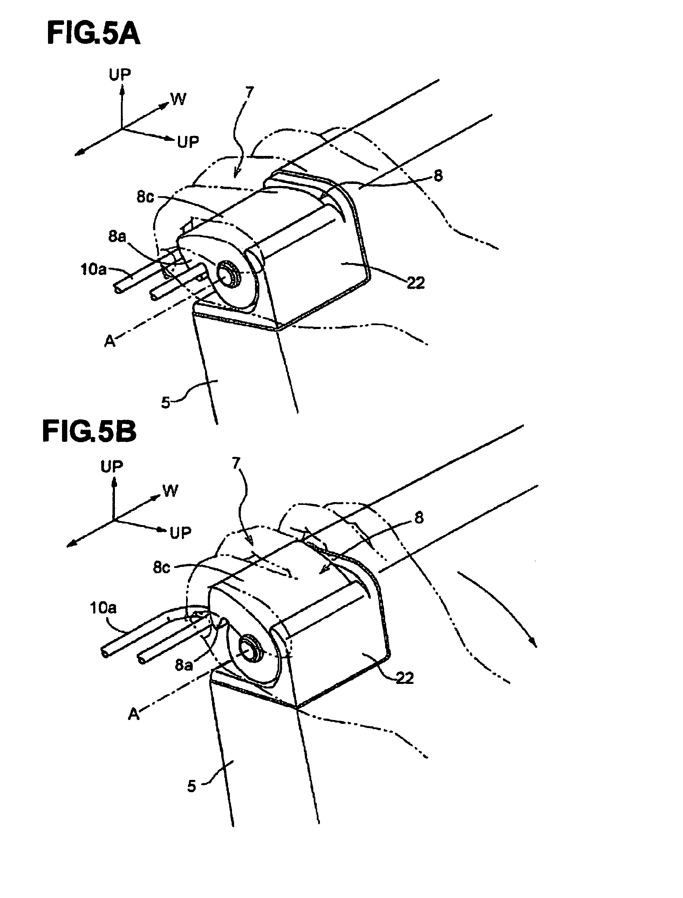

Figs. 4A and 4B show, as side views, that the lock mechanism 7 is unlocked, and Figs. 5A and 5B show, as perspective views, the same. Arrows shown in Figs. 4B and 5B depict the rotating direction of the lock member 8.

As shown in Fig. 4A, the lock member 8 is urged by the coil spring 18 incorporated therein so as to rotate in a counterclockwise direction on a sheet of Fig. 4A. The lock member 8 is configured such that, in a locked state, the hook portion 8a of the lock member 8 enters the inside of the U shape of the latching portion 10a of the lock striker, whereupon the hook portion 8a engages with the latching portion 10a, to thus regulate forwardly rotating action of the seat back 5 and be able to hold the seat back 5 in the upright position as indicated by the solid line in Fig. 1.

In order to unlock the lock mechanism 7, the operator (e.g., a passenger, or the like) grips the handgrip 8c while placing fingers on a rear end of the handgrip 8c of the lock member 8 and rotates the lock member 8 forwardly in defiance of restoration force of the coil spring around the shaft core A of the mount bolt 13 as shown in Fig. 5A. That is, the lock member 8 is rotated clockwise as shown in Fig. 4B.

Accordingly, as shown in Figs. 4B and 5B, the hook portion 8a and the latching portion 10a are disengaged from each other. That is, they are released from a locked state. The operator further rotates the lock member 8 continually as shown in Fig. 1, the seat back 5 is forwardly rotated about the shaft 6 (the pivot) located at the lower end of the seat back, so that the seat becomes forwardly tipped on the seat cushion 4. Consequently, the trunk room floor 9 located behind the rear seat 3 is extended.

In other words, in the vehicle seat of the present embodiment, the rotating direction of the handgrip 8c of the lock member 8 when the hook portion 8a of the lock member 8 and the latching portion 10a of the lock striker 10 are disengaged from each other coincides with the direction in which the seat back 5 is forwardly tipped. Therefore, when the seat back 5 in the upright position is forwardly tipped, operation for unlocking the lock member 8 and forwardly tipping operation for forwardly tipping the seat back 5 can be performed as one series of continuous operations, as a result of which operability when the seat back 5 is forwardly tipped can be improved.

(Cover 22)

As shown in Figs. 2 and 3, the cutout 12 is provided with a cover 22 (bezel) separately from the seat back 5. The cover 22 is provided so as to cover a front surface of the lock member 8, and the hook portion 8a and the handgrip 8c of the lock member 8 are hidden behind the cover 22, so that superior appearance can be obtained and the design of the entire seat back 5 can be preserved. The cover 22 is also provided so as to cover an upper end of the frame material 14 and the spring latch member 16 even at the rear surface of the lock member 8. The seat back 5 shown in Fig. 3 is provided with a cushion pad 5a that has a cover (not shown) laid over its surface and that is formed from urethane foam, a spring 5b, and a seat back board 5c.

(Locking operation of the lock mechanism 7 and rising operation of the seat back 5)

In the vehicle seat of the present embodiment, a method for returning the seat back 5 in the forwardly-tipped position to the upright position and locking the lock mechanism 7 will be described.

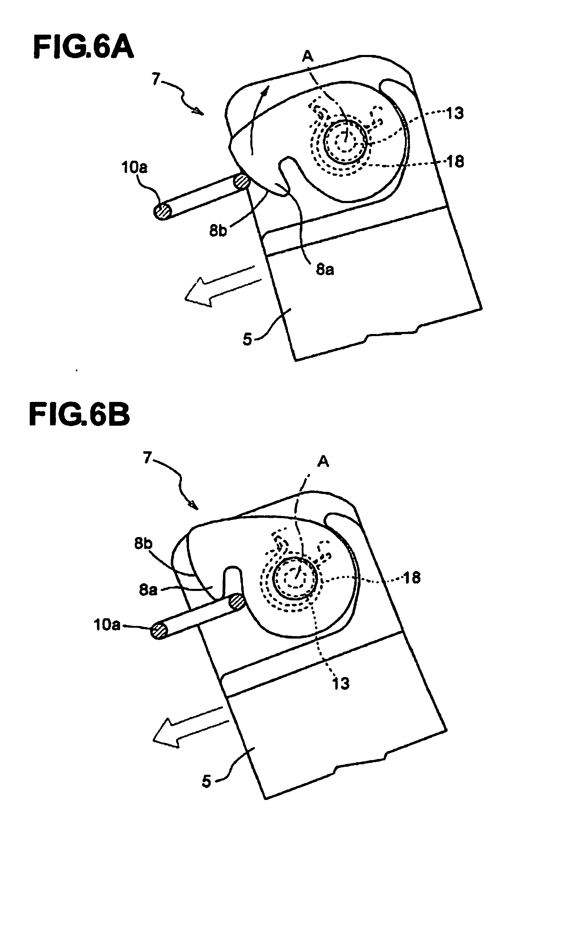

Figs. 6A and 6B show, as a side view, that the lock mechanism 7 is locked. Arrows of a solid line shown in Figs. 6A and 6B depict a rotating direction of the lock member 8, and outlined arrows depict the rotating direction of the seat back 5.

As shown in Fig. 6A, the seat back 5 in the forwardly-tipped position is rearwardly rotated, thereby pressing the hook portion 8a of the lock member against the latching portion 10a of the lock striker.

A smooth curved surface 8b is formed on the hook portion 8a of the lock member 8. When the hook portion 8a is pressed against the latching portion 10a, the curved surface 8a comes into contact with the latching portion 10a. By exerting additional pressing force to the latching portion, the curved surface 8b of the hook portion 8a can rotate in a clockwise direction on a sheet of Fig. 6A about the shaft core A of the mount bolt 13 in defiance of restoration force of the coil spring 18 while slidably contacting the latching portion 10a of the lock striker. That is, the curved surface is slidable along the latching portion 10a of the lock striker 10.

When the curved surface 8b of the hook portion 8a goes beyond the latching portion 10a of the lock striker 10 as shown in Fig. 6B, the hook portion 8a again enters into the inside of the U shape of the latching portion 10a of the lock striker by means of the restoration force of the coil spring 18, to thus engage with the latching portion and enter a locked state. Accordingly, the seat back 5 is held in the upright position as indicated by the solid line in Fig. 1.

[Other Embodiments]

There can also be adopted a configuration in which the cutout 12 (the lock member 8) of the above embodiment is provided in a right end of the upper edge of the seat back 5 with respect to the width direction of the vehicle, and in which the lock striker 10 is provided on the right side of the vehicle body 11 with respect to the width direction of the vehicle.

The above embodiment has described the configuration in which the cutout 12 is provided with the cover 22 separately from the seat back 5. However, the present invention is not limited to this configuration. There can also be adopted a configuration in which the cover 22 and the seat back 5 are provided in the form of a single unit.

The above embodiment has described the configuration in which the cutout 12 is provided with the cover 22. However, the present invention is not limited to this configuration, and there may also be adopted a configuration in which the cover 22 is not provided.

The lock striker 10 of the embodiment can also assume the shape of the letter I whose axis line is not bent.

## Claims

1. A vehicle seat comprising:
a seat back (5) ;
a lock member (8) **rotatably** supported at **an end portion of the seat back (5) in a vehicle width direction,**
wherein the lock member (8) includes a handgrip (8c) and a hook portion (8a) **continually connected to each other and** engageable with a lock striker (10) provided on a vehicle body, and
wherein by rotating the handgrip (8c) forwardly, the hook portion (8a) is rotated forwardly to be disengaged from the lock striker (10) so that the seat back (5) becomes rotatable forwardly about a pivot at a lower end thereof, **characterized in that**
**the lock member (8) is provided in a cutout (12) formed in an upper edge of the seat back (5) at the end portion thereof in the vehicle width direction.**

2. The vehicle seat according to claim 1,
wherein the seat back (5) overlaps the lock striker (10) when viewed from the above.

3. The vehicle seat according to claim 1 or 2,
wherein the handgrip (8c) is provided within the seat back (5) in the width direction of the vehicle.

4. The vehicle seat according to any one of claims 1 to 3,
wherein a direction from the axis to the handgrip (8c) is same as a direction from the axis to the hook portion (8a).

5. The vehicle seat according to any one of claims 1 to 4,
wherein the lock member (8) includes a coil spring (18) which urges the lock member (8) to engage with the lock striker (10).

6. The vehicle seat according to claim 5,
wherein the coil spring (18) urges the lock member (8) rearwardly.

7. The vehicle seat according to any one of claims 1 to 6,
wherein the lock striker (10) is made of a round metal bar which extends in the width direction of the vehicle,
wherein the hook portion (8a) includes a curved surface (8b) which is slidable along the round bar of the lock striker (10), and
wherein the hook portion (8a) includes a steel plate for reinforcement.

8. The vehicle seat according to any one of claims 1 to 7,
wherein the cutout (12) is provided with a cover (22) to cover the lock member (8).

## Patentansprüche

1. Fahrzeugsitz mit:
einer Rückenlehne (5);
einem Verriegelungsteil (8), das an einem Endabschnitt der Rückenlehne (5) in einer Fahrzeugbreitenrichtung drehbar gelagert ist,
wobei das Verriegelungsteil (8) einen Handgriff (8c) und einen Hakenabschnitt(8a) umfasst, die kontinuierlich miteinander verbunden und mit einem Schließbügel (10) in Eingriff bringbar sind, der an einer Fahrzeugkarosserie vorgesehen ist, und
wobei der Hakenabschnitt (8a) durch Drehen des Handgriffs nach vorn vorwärts gedreht wird, um vom Schließbügel (10) so gelöst zu werden, dass die Rückenlehne (5) um einen Drehpunkt an ihrem unteren Ende nach vorn drehbar wird, **dadurch gekennzeichnet, dass**
das Verriegelungsteil (8) in einer Aussparung (12) vorgesehen ist, die in einer oberen Kante der Rückenlehne (5) am Endabschnitt derselben in der Fahrzeugbreitenrichtung geformt ist.

2. Fahrzeugsitz nach Anspruch 1,
wobei die Rückenlehne (5) den Schließbügel (10) von oben gesehen überlappt.

3. Fahrzeugsitz nach Anspruch 1 oder 2,
wobei der Handgriff (8c) in der Fahrzeugbreitenrichtung innerhalb der Rückenlehne (5) vorgesehen ist.

4. Fahrzeugsitz nach einem der Ansprüche 1 bis 3,
wobei eine Richtung von der Achse zu dem Handgriff (8c) dieselbe wie eine Richtung von der Achse zu dem Hakenabschnitt (8a) ist.

5. Fahrzeugsitz nach einem der Ansprüche 1 bis 4,
wobei das Verriegelungsteil (8) eine Schraubenfeder (18) umfasst, die das Verriegelungsteil (8) zum Eingreifen in den Schließbügel (10) vorspannt.

6. Fahrzeugsitz nach Anspruch 5,
wobei die Schraubenfeder (18) das Verriegelungsteil (8) nach hinten vorspannt.

7. Fahrzeugsitz nach einem der Ansprüche 1 bis 6,
wobei der Schließbügel (10) aus einer runden Metallstange hergestellt ist, die sich in der Fahrzeugbreitenrichtung erstreckt,
wobei der Hakenabschnitt (8a) eine gekrümmte Oberfläche (8b) umfasst, die um die runde Stange des Schließbügels (10) gleitfähig ist, und
wobei der Hakenabschnitt (8a) eine Stahlplatte zur Verstärkung umfasst.

8. Fahrzeugsitz nach einem der Ansprüche 1 bis 7,
wobei die Aussparung (12) mit einer Abdeckung (22) versehen ist, um das Verriegelungsteil (8) abzudecken.

## Revendications

1. Siège de véhicule comprenant:
un dossier de siège (5) ;
un élément de blocage (8) supporté de manière rotative au niveau d'une partie d'extrémité du dossier de siège (5) dans le sens de la largeur du véhicule,
dans lequel l'élément de blocage (8) comprend une poignée (8c) et une partie de crochet (8a) raccordées de manière continue entre elles et pouvant se mettre en prise avec une gâche (10) prévue sur une carrosserie de véhicule, et
dans lequel, en faisant tourner la poignée (8c) vers l'avant, la partie de crochet (8a) est entraînée en rotation vers l'avant pour se dégager de la gâche (10) de sorte que le dossier de siège (5) peut tourner vers l'avant autour d'un pivot au niveau de son extrémité inférieure, **caractérisé en ce que** :
l'élément de blocage (8) est prévu dans une découpe (12) formée dans un bord supérieur du dossier de siège (5) au niveau de sa partie d'extrémité dans le sens de la largeur du véhicule.

2. Siège de véhicule selon la revendication 1,
dans lequel le dossier de siège (5) recouvre la gâche (10) lorsqu'elle est observée depuis le dessus.

3. Siège de véhicule selon la revendication 1 ou 2,
dans lequel la poignée (8c) est prévue à l'intérieur du dossier de siège (5) dans le sens de la largeur du véhicule.

4. Siège de véhicule selon l'une quelconque des revendications 1 à 3,
dans lequel une direction allant de l'axe jusqu'à la poignée (8c) est la même qu'une direction allant de l'axe jusqu'à la partie de crochet (8a).

5. Siège de véhicule selon l'une quelconque des revendications 1 à 4,
dans lequel l'élément de blocage (8) comprend un ressort hélicoïdal (18) qui pousse l'élément de blocage (8) pour se mettre en prise avec la gâche (10).

6. Siège de véhicule selon la revendication 5,
dans lequel le ressort hélicoïdal (18) pousse l'élément de blocage (8) vers l'arrière.

7. Siège de véhicule selon l'une quelconque des revendications 1 à 6,
dans lequel la gâche (10) est réalisée à partir d'une barre métallique ronde qui s'étend dans le sens de la largeur du véhicule,
dans lequel la partie de crochet (8a) comprend une surface incurvée (8b) qui peut coulisser le long de la barre ronde de la gâche (10), et
dans lequel la partie de crochet (8a) comprend une plaque en acier pour le renforcement.

8. Siège de véhicule selon l'une quelconque des revendications 1 à 7,
dans lequel la découpe (12) est prévue avec un couvercle (22) pour recouvrir l'élément de blocage (8).
